# EUROPEAN PATENT APPLICATION

(11) **EP 1 431 602 A1**
(43) Date of publication of application: **23.06.2004**
(21) Application number: 02777797.8
(22) Date of filing: 27.09.2002
(51) Int. Cl.: F16D 1/06, F04C 23/00, F04B 35/00, F16H 55/36

(54) **ROTARY MACHINE**

(30) Priority: 27.09.2001 JP 2001297358
(71) Applicant: Kabushiki Kaisha Toyota Jidoshokki, Kariya-shi, Aichi-ken 448-8671 (JP)
(72) Inventor: OTA, Masaki, c/o KABUSHIKI KAISHA TOYOTA, Kariya-shi, Aichi 448-8671 (JP); KAWAGUCHI, Masahiro, c/o KABUSHIKI KAISHA TOYOTA, Kariya-shi, Aichi 448-8671 (JP); ADANIYA, Taku, c/o KABUSHIKI KAISHA TOYOTA, Kariya-shi, Aichi 448-8671 (JP); KANAI, Akinobu, c/o KABUSHIKI KAISHA TOYOTA, Kariya-shi, Aichi 448-8671 (JP); ARAI, Tomoharu, c/o KABUSHIKI KAISHA TOYOTA, Kariya-shi, Aichi 448-8671 (JP); KAWATA, Takeshi, c/o KABUSHIKI KAISHA TOYOTA, Kariya-shi, Aichi 448-8671 (JP)
(74) Representative: Leson, Thomas Johannes Alois, Dipl.-Ing.
(86) International application number: PCT/JP2002/010041
(87) International publication number: WO 2003/029673

(57) **Abstract**

A rotary machine includes a housing, a drive shaft (16), a first rotor (42), a second rotor (17), and an absorption mechanism. The drive shaft is rotatably supported by the housing. The first rotor is integrally and rotatably fixed to the drive shaft outside the housing. The second rotor is rotatably supported on the housing outside the housing and operably connected to the first rotor by the absorption mechanism in a state substantially coaxial to the first rotor. The absorption mechanism is for absorbing misalignment between the axis of the first rotor and the axis of the second rotor. The absorption mechanism is formed from an accommodating recess (45), a support member (50) that is a rigid member, and an eccentric pin (51).

## Description

### TECHNICAL FIELD

The present invention relates to a rotary machine having a first rotor integrally and rotatably fixed to a rotating shaft rotatably supported in a housing and a second rotor rotatably supported by the housing and operably connected to the first rotor.

### BACKGROUND ART

A rotary machine including a vehicle mountable compressor, which is driven by a vehicle engine, has a first rotor fixed to a rotating shaft for driving a compression mechanism, and a second rotor operably connected to the first rotor and connected to the engine by a belt. In general, the second rotor is rotatably supported by a bearing on a housing of the compressor that supports the rotating shaft. The bearing decreases the stress acting on the rotating shaft that is produced by the tension of the belt. This, in turn, decreases the stress acting on a bearing member that supports the rotating shaft.

In the rotary machine, a member for supporting the first rotor differs from a member for supporting the second rotor. Thus, a mechanism for absorbing (tolerating) misalignment between the axis of the first rotor and the axis center of the second rotor, or axial misalignment, is necessary. Unless such mechanism is provided, the durability of the bearing member supporting the rotating shaft and the durability of the bearing supporting the second rotor decreases. Conventionally, the first rotor and the second rotor are operably connected by an elastic member to absorb the axial misalignment.

However, when the elastic member operably connects the two rotors, there is a possibility that vibration generated by the compression mechanism of the compressor or by the vehicle engine and the like being transmitted to the elastic member and resonating the first rotor and the second rotor. Furthermore, there is a possibility that the load repetitively acting on the elastic member may cause fatigue of the elastic member and reduce the durability of the rotary machine.

### DISCLOSURE OF THE INVENTION

It is an object of the present invention to provide a rotary machine capable of easily avoiding resonance between the first rotor and the second rotor while improving the durability of the rotary machine.

To achieve the above object, the present invention provides a rotary machine described below. The rotary machine includes a housing, a rotating shaft, a first rotor, a second rotor, and an absorption mechanism. The rotating shaft is rotatably supported in the housing. The first rotor is integrally and rotatably fixed to the rotating shaft outside the housing. The second rotor is rotatably supported on the housing outside the housing and operably connected to the first rotor in a state substantially coaxial to the first rotor. The absorption mechanism is arranged on a connecting portion of the first rotor and the second rotor to absorb misalignment between the axis of the first rotor and the axis of the second rotor. The absorption mechanism is formed from a rigid member.

### BRIEF DESCRIPTION OF THE DRAWINGS

Fig. 1 is a cross sectional view showing a rotary machine according to a first embodiment of the present invention;
Fig. 2(a) is a front view showing a power transmission mechanism provided in the rotary machine in Fig. 1;
Fig. 2(b) is a cross sectional view of the power transmission mechanism shown in Fig. 2(a);
Fig. 3(a) is a front view showing a power transmission mechanism provided in a rotary machine according to a second embodiment of the present invention; and
Fig. 3(b) is a cross sectional view of the power transmission mechanism shown in Fig. 3(a).

### BEST MODE FOR CARRYING OUT THE INVENTION

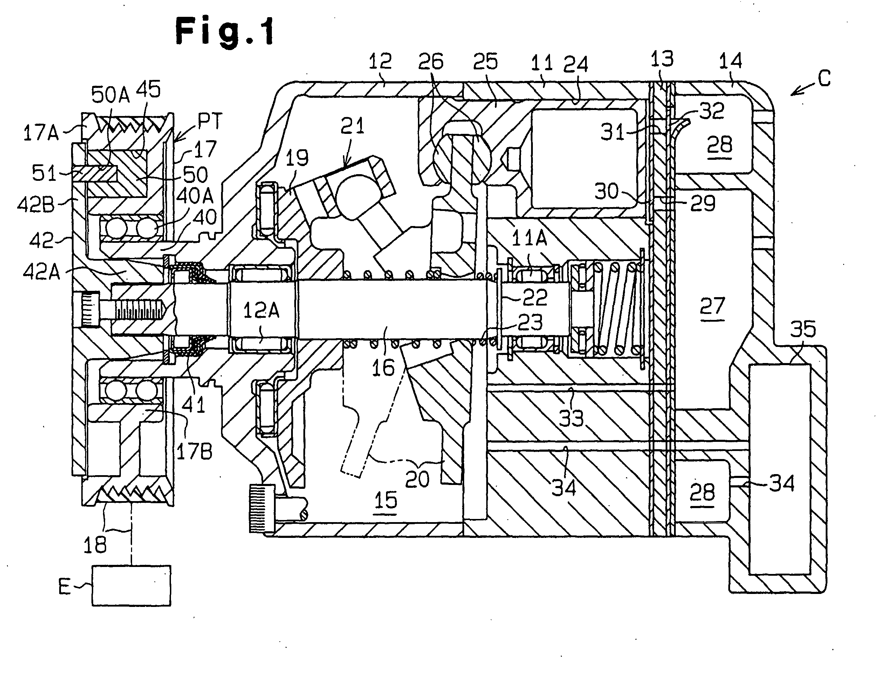

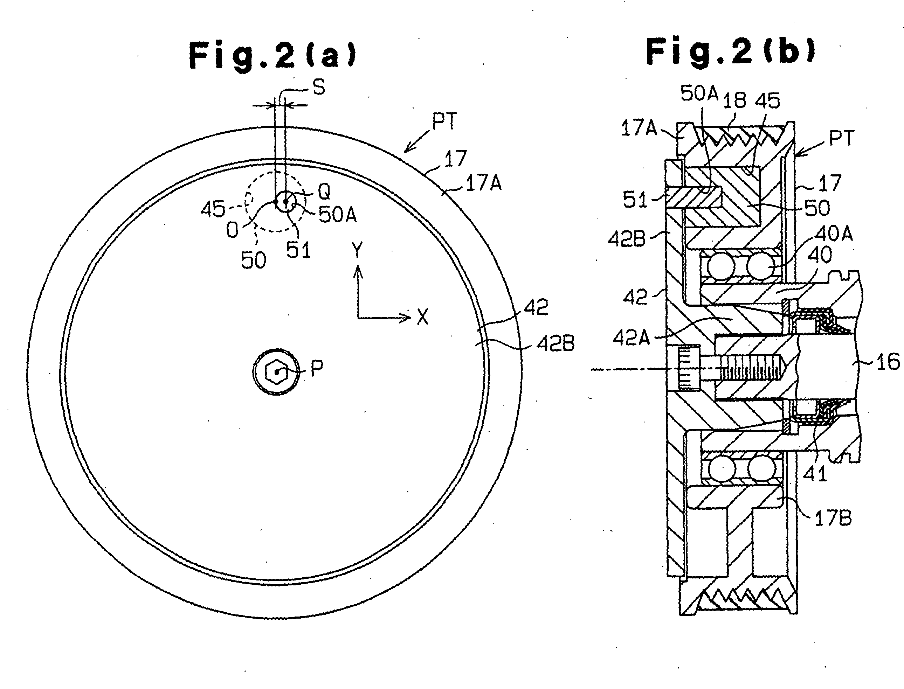

A first embodiment of the present invention will now be explained with reference to Fig. 1, Fig. 2(a), and Fig. 2(b). In Fig. 1, the left side of the drawing corresponds to the front side of the compressor and the right side of the drawing corresponds to the rear side of the compressor.

As shown in Fig. 1, a compressor C forming portion of a vehicle air conditioning system includes a cylinder block 11, a front housing 12 coupled to a front end of the cylinder block 11, and a rear housing 14 coupled to a rear end of the cylinder block 11 by way of a valve plate assembly 13. The cylinder block 11, the front housing 12, the valve plate assembly 13, and the rear housing 14 form a housing of the compressor C.

The region surrounded by the cylinder block 11 and the front housing 12 defines a crank chamber 15. A drive shaft 16, which functions as a rotating shaft, extending through the crank chamber 15, is rotatably supported in the housing of the compressor C. A front end portion of the drive shaft 16 is supported by a radial bearing 12A, which is fixed to the front wall of the front housing 12. Furthermore, a rear end portion of the drive shaft 16 is supported by a radial bearing 11A, which is fixed to the cylinder block 11.

The front end portion of the drive shaft 16 extends through the front wall of the front housing 12 projecting externally. The front end portion of the drive shaft 16 is operably connected to a vehicle engine E, which functions as an external drive source, by a power transmission mechanism PT and a belt 18. The belt 18 is connected to a pulley 17, which forms portion of the power transmission mechanism PT. The power transmission mechanism PT and the compressor C thus form a rotary machine.

A lug plate 19 is integrally and rotatably fixed to the drive shaft 16 in the crank chamber 15. A swash plate 20, which functions as a drive plate, is accommodated in the crank chamber 15. The swash plate 20 is supported on the drive shaft 16 in a manner that it is slidable in the axial direction of the drive shaft 16 and inclinable with respect to the drive shaft 16. Further, the swash plate 20 is connected to the lug plate 19 by a hinge mechanism 21. Thus, the swash plate 20 rotates in synchronization with the lug plate 19 and the drive shaft 16, and inclines with respect to the drive shaft 16 while sliding in the axial direction of the drive shaft 16.

The minimum inclination angle of the swash plate 20 is defined by a stopper ring 22, which is fixed to the drive shaft 16, and a spring 23 arranged between the stopper ring 22 and the swash plate 20. The swash plate 20 is movable between a minimum inclination angle position as shown by the solid lines in Fig. 1 and a maximum inclination angle position, as shown by the double-dashed lines in Fig. 1. When the swash plate 20 is at the minimum inclination angle position, the angle between the swash plate 20 and a plane orthogonal to the axis of the drive shaft 16 is closest to 0°.

In the cylinder block 11, a plurality of (only one shown in Fig. 1) cylinder bores 24 are formed extending through the cylinder block 11. The cylinder bore 24 extends along the axis of the drive shaft 16 and is arranged around the axis of the drive shaft 16 at equiangular intervals. Each cylinder bore 24 accommodates a single-headed piston 25 in a manner enabling a reciprocating motion. The openings of both ends of each cylinder bore 24 are closed by the valve plate assembly 13 and the piston 25. A compression chamber having a capacity that varies in accordance with the reciprocating motion of the piston 25 is defined within each cylinder bore 24. Each piston 25 is coupled to the periphery of the swash plate 20 by a pair of shoes 26. The rotational motion of the swash plate 20 produced by the rotation of the drive shaft 16 is converted to the reciprocating linear motion of each piston 25 by the shoes 26.

The cylinder block 11, the drive shaft 16, the lug plate 19, the swash plate 20, the hinge mechanism 21, the pistons 25, and the shoes 26 form a variable displacement piston-type compression mechanism.

A suction chamber 27 and a discharge chamber 28 are each defined in the rear housing 14. The opening of the suction chamber 27 and the discharge chamber 28 facing the valve plate assembly 13 are blocked by the valve plate assembly 13. The valve plate assembly 13 includes a suction port 29, a suction valve 30, a discharge port 31, and a discharge valve 32 in correspondence with each cylinder bore 24. When each piston 25 moves from the top dead center to the bottom dead center, refrigerant gas in the suction chamber 27 is drawn into the cylinder bore 24 through the corresponding suction port 29 and the suction valve 30. When each piston 25 moves from the bottom dead center to the top dead center, the low pressure refrigerant gas drawn into the cylinder bore 24 is compressed to a predetermined pressure and then sent to the discharge chamber 28 through the corresponding discharge port 31 and the discharge valve 32.

The suction chamber 27 and the discharge chamber 28 are connected by an external refrigerant circuit (not shown). The refrigerant sent from the discharge chamber 28 to the external refrigerant circuit returns to the suction chamber 27 via a condenser, an expansion valve, and an evaporator, which are arranged along the external refrigerant circuit.

In the housing of the compressor C, a bleed passage connects the crank chamber 15 and the suction chamber 27, and a supply passage 34 connects the discharge chamber 28 and the crank chamber 15. The opening of the supply passage 34 is adjusted by a control valve 35, which is provided in the supply passage 34.

The refrigerant gas in the crank chamber 15 is discharged to the suction chamber 27 through the bleed passage 33. The control valve 35 adjusts the flow of refrigerant gas supplied from the discharge chamber 28 to the crank chamber 15 through the supply passage 34. The opening of the control valve 35 is adjusted to determine the internal pressure of the crank chamber 15, or the crank chamber pressure Pc. The difference between the crank chamber pressure Pc and the internal pressure of the compression chamber changes in accordance with the crank chamber pressure Pc. This, in turn, alters the inclination angle of the swash plate 20. As a result, the amount of discharged refrigerant (displacement of compressor C) per one stroke of the piston 25, or one rotation of the drive shaft 16, is adjusted.

A support tube 40 extends from the front outer wall surface of the front housing 12 around the front end of the drive shaft 16. The axis of the outer cylindrical surface of the support tube 40 substantially coincides with the axis of the drive shaft 16. A lip seal 41 seals the gap between the inner cylindrical surface of the support tube 40 and the outer cylindrical surface of the drive shaft 16 to seal the gap formed therebetween. The lip seal 41 prevents the refrigerant in the crank chamber 15 from leaking out of the housing of the compressor C through the gap between the inner cylindrical surface of the support tube 40 and the outer cylindrical surface of the drive shaft 16.

A receiving member 42, which serves as a first rotor, is integrally and rotatably fixed to the front end portion of the drive shaft 16 outside the housing of the compressor C. The receiving member 42 includes a cylindrical portion 42A and a generally disk-like hub 42B formed integrally with the cylindrical portion 42A. The cylindrical portion 42A is inserted in the support tube 40 at a position anterior to the lip seal 41. The hub 42B is positioned anterior to the support tube 40.

A pulley 17, which serves as a second rotor, includes a generally cylindrical belt connecting portion 17A, to which the belt 18 is connected, and a tubular portion 17B, which is coaxial with the belt connecting portion 17A. An outer race of a radial bearing 40A, externally fitted to the support tube 40, is attached to the inner surface of the tubular portion 17B, and thus the pulley 17 is rotatably supported on the housing of the compressor C. Further, the pulley 17 is substantially coaxial with the drive shaft 16 and the receiving member 42, and is relatively rotatable with respect to the drive shaft 16 and the receiving member 42.

The pulley 17 is provided with one accommodating recess 45, which has a circular cross section and an open front side. The accommodating recess 45 is located between the belt connecting portion 17A and the tubular portion 17B. The axis of the accommodating recess 45 is parallel to the rotation axis of the pulley 17. A cylindrical support member 50, which is a rigid member, is received in the accommodating recess 45. The axis of the support member 50 coincides with the axis of the accommodating recess 45. The outer diameter of the support member 50 is substantially equal to the inner diameter of the accommodating recess 45. The support member 50 is rotatable about its axis within the accommodating recess 45.

A recess 50A, which has a circular cross section and an open front side is formed in the support member 50. The axis of the recess 50A is parallel to the axis of the support member 50 and is eccentric to the axis of the support member 50 by a predetermined eccentricity amount S. The eccentricity amount S is set sufficiently large with respect to the amount of misalignment between the axis of the pulley 17 and the axis of the receiving member 42, that is, with respect to axis misalignment.

A cylindrical eccentric pin 51, which is a rigid member, is fixed to the peripheral portion of the hub 42B of the receiving member 42. The eccentric pin 51 is fitted into a hole formed in the peripheral portion of the hub 42B with the rear end portion projecting toward the pulley 17. The axis of the eccentric pin 51 is parallel to the rotation axis of the hub 42B. The outer diameter of the eccentric pin 51 is substantially equal to the inner diameter of the recess 50A. The rear end of the eccentric pin 51 is inserted into the recess 50A. The eccentric pin 51 connects the receiving member 42 and the support member 50 in a state in which the support member 50 is relatively rotatable about the eccentric pin 51.

Looking at the power transmission mechanism PT from the front (see Fig. 2(a)), a direction parallel to a hypothetical line connecting a rotating center O of the support member 50 and a rotating center P of the pulley 17 is referred to as the Y direction. Here, the maximum movement amount of the center Q of the recess 50A is twice the eccentricity amount S. The maximum movement of the center Q of the recess 50A is the maximum movement range on which the eccentric pin 51 is movable when the support member 50 rotates relative to the pulley 17. The eccentric pin 51 is arranged in about the middle of the movement range, in which the eccentric pin 51 is movable in the Y direction, to ensure absorption of axis misalignment. Here, the distance between the axis of the eccentric pin 51 and the axis of the receiving member 42 is set so as to be sufficiently large with respect to the amount of axis center misalignment.

The accommodating recess 45, the support member 50, and the eccentric pin 51 form an absorption mechanism for absorbing axis misalignment.

The operation of the rotary machine having the above structure will now be explained.

The power of the vehicle engine E is transmitted to the pulley 17 through the belt 18. The power transmitted to the pulley 17 is then transmitted to the receiving member 42 by the support member 50 and the eccentric pin 51. When power is supplied to the drive shaft 16, the drive shaft 16 and the swash plate 20 rotate together. Due to the rotation of the swash plate 20, each piston 25 reciprocates with a stroke corresponding to the inclination angle of the swash plate 20 to sequentially repeat suction, compression, and discharge of refrigerant at each cylinder bore 24.

When the opening of the control valve 35 becomes small, the amount of high-pressure refrigerant gas supplied from the discharge chamber 28 to the crank chamber 15 through the supply passage 34 becomes small. As a result, the crank chamber pressure Pc decreases, the inclination angle of the swash plate 20 increases, and the displacement of the compressor C increases. Conversely, when the opening of the control valve 35 becomes large, the amount of high-pressure refrigerant gas supplied from the discharge chamber 28 to the crank chamber 15 through the supply passage 34 becomes large. As a result, the crank chamber pressure Pc increases, the inclination angle of the swash plate 20 decreases, and the displacement of the compressor C decreases.

Looking at the power transmission mechanism PT from the front, when the axis of the pulley 17 deviates from the axis of the receiving member 42, the pulley 17 and the receiving member 42 move relatively to each other in such a way that one axis orbits around the other axis, with a radius corresponding to the amount of axis misalignment. In other words, the movement range of one axis is twice the amount of axis misalignment with respect to the other axis center. Movement in the Y direction during such relative movement is tolerated (absorbed) by the movement of the eccentric pin 51 in the Y direction when the support member 50 rotates in the accommodating recess 45. Furthermore, movement in the X direction, which is orthogonal to the Y direction (direction orthogonal to the Y direction in a plane orthogonal to the rotation axis of the pulley 17) is tolerated (absorbed) by relative rotation of the pulley 17 and the receiving member 42 (relative rotation produced between the axes of the pulley 17 and the receiving member 42) and movement of the eccentric pin 51 in the X direction when the support member 50 rotates in the accommodating recess 45. In the present embodiment, the distance between the axis of the eccentric pin 51 and the axis of the receiving member 42 is set sufficiently large with respect to axis misalignment. Thus, the angle of relative rotation between the pulley 17 and the receiving member 42 is small.

The present embodiment has the following advantages.

The misalignment between the axis center of the pulley 17 and the axis center of the receiving member 42 is absorbed by the movement of the eccentric pin 51 based on the rotation of the support member 50 in the accommodating recess 45. Thus, there is no need to arrange an elastic member on the connecting portion (on the power transmission path) of the pulley 17 and the receiving member 42. This eliminates the possibility of the pulley 17 and the receiving member 42 resonating that would be caused by the elastic member as a result of vibration from a vibration source, such as the vehicle engine E or the compressor C. The frequency of vibration when resonance occurs is less in the elastic member than in a rigid member. Thus, the frequency of vibration when resonance occurs in the present embodiment is higher than in a structure having an elastic member arranged at the coupling part. In other words, the frequency of vibration when resonance occurs between the pulley 17 and the receiving member 42 is easily set to be larger than the frequency of vibration of the vibration source, and occurrence of resonance that would be caused by the vibration of a vibration source is easily avoided.

Compared to a structure in which an elastic member is arranged at the connecting portion of the pulley 17 and the receiving member 42, there is no decrease in the durability of the rotary machine caused by fatigue of the elastic member as a result of repeated load acting on the elastic member. This improves the durability of the rotary machine.

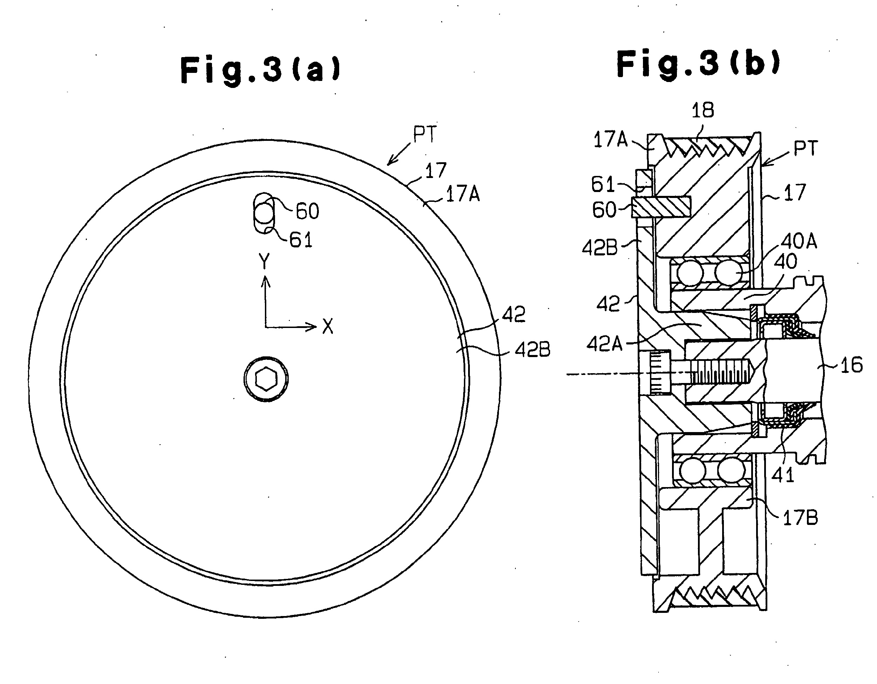

A second embodiment of the present invention will now be explained with reference to Fig. 3(a) and Fig. 3(b). The pulley 17, the receiving member 42, and the absorption mechanism in the rotary machine of the second embodiment are structured differently from those in the rotary machine of the first embodiment, but other components are structured in the same manner as in the first embodiment. Therefore, elements identical to the first embodiment are given like reference numbers in the figures and overlapping descriptions will not be given.

As shown in Fig. 3(a) and Fig. 3(b), a cylindrical connecting pin 60, which is a rigid member, is fixed at a portion between the belt connecting portion 17A and the tubular portion 17B in the pulley 17. The connecting pin 60 is fitted into a recess formed on the front face side of the pulley 17, with the front end portion thereof projected toward the hub 42B side. The axis of the connecting pin 60 is parallel to the rotation axis of the pulley 17.

An elongated hole 61, which functions as a connecting portion, is formed extending through the peripheral portion of the hub 42B of the receiving member 42, which is a rigid member at a portion corresponding to the connecting pin 60. The elongated hole 61 extends in the radial direction of the hub 42B. The width of the elongated hole 61 is substantially equal'to the outer diameter of the connecting pin 60. The connecting pin 60 has a front end inserted into and engaged with the elongated hole 61. In other words, the connecting pin 60 is slidable in the radial direction of the hub 42B along the elongated hole 61, and rotatable within the elongated hole 61.

In the present embodiment, the shape of the elongated hole 61 is such that the maximum sliding amount of the connecting pin 60 is sufficiently larger than twice the amount of the axis misalignment. The maximum sliding amount of the connecting pin 60 is the maximum sliding movement amount of the connecting pin 60 in the longitudinal direction of the elongated hole 61 within the elongated hole 61. In order to ensure absorption of the axis misalignment, the connecting pin 60 is arranged in a substantially middle part of the slidable range. The distance between the axis of the connecting pin 60 and the axis of the pulley 17 is set sufficiently large with respect to the amount of axis misalignment.

The connecting pin 60 and the elongated hole 61 form an absorption mechanism for absorbing the axis misalignment.

In the present embodiment, the power transmitted from the vehicle engine E to the pulley 17 is transmitted to the receiving member 42 via the connecting pin 60 and the elongated hole 61.

The movement in the longitudinal direction Y of the elongated hole 61 due to relative movement of the pulley 17 and the receiving member 42 resulting from axis misalignment is tolerated (absorbed) by the sliding of the connecting pin 60 along the elongated hole 61. Furthermore, movement in the X direction orthogonal to the longitudinal direction (direction orthogonal to the longitudinal direction in a plane orthogonal to the axis of rotation of the receiving member 42) is tolerated (absorbed) by the relative rotation (relative rotation with respective axis center of the pulley 17 and the receiving member 42 as the center) between the pulley 17 and the receiving member 42 and the sliding of the connecting pin 60 along the elongated hole 61.

In the present embodiment, the distance between the axis of the connecting pin 60 and the axis of the pulley 17 is set so as to be sufficiently large with respect to the amount of axis misalignment. Thus, the angle of relative rotation between the pulley 17 and the receiving member 42 is small.

The present embodiment has the following advantages in addition to the advantages obtained in the first embodiment.

Due to the sliding along the elongated hole 61 or the rotation (occurring during relative rotation between the pulley 17 and the receiving member 42) within the elongated hole 61 of the connecting pin 60 fixed to the pulley 17, the axis misalignment of the pulley 17 and the receiving member 42 is absorbed. Thus, compared to the structure of the first embodiment, the number of members forming the absorption mechanism is reduced. Thus, the structure of the absorption mechanism is simpler.

The embodiments may be modified as follows.

In the first embodiment, the eccentric pin 51 and the receiving member 42 may be integrally formed.

In the first embodiment, the support member 50 is rotatably arranged on the pulley 17, and the eccentric pin 51 is fixed to the receiving member 42. However, a support member may be rotatably supported by a receiving member, and an eccentric pin may be fixed to a pulley.

In the first embodiment, the eccentric pin 51 is fixed to the receiving member 42 and rotatable relative to the support member 50. However, a eccentric pin may be fixed to a support member and coupled to a receiving member in a relatively rotatable manner. In this case, the support member and the eccentric pin may be integrally formed.

In the first embodiment, the eccentric pin 51 may be coupled to both the receiving member 42 and the support member 50 in a relatively rotatable manner.

In the first embodiment, the eccentricity amount S is set so as to be sufficiently large with respect to the amount of axis misalignment of the pulley 17 and the receiving member 42, but needs only to be greater than the amount of axis center misalignment. As long as the eccentricity amount S is at least equal to the amount of axis misalignment, the axis misalignment is absorbed.

In the second embodiment, the connecting pin 60 and the pulley 17 may be integrally formed.

In the second embodiment, the connecting pin 60 is fixed to the pulley 17 and the elongated hole 61 (support member) is arranged in the receiving member 42. However, a connecting pin may be fixed to a receiving member and a support member may be arranged in a pulley. In this case, the connecting pin and the receiving member may be integrally formed.

In the second embodiment, the maximum sliding amount of the connecting pin 60 in the elongated hole 61 is set so as to be sufficiently larger than twice the amount of axis misalignment of the pulley 17 and the receiving member 42, but needs only to be greater than twice the amount of axis misalignment. As long as the maximum sliding amount is at least equal to twice the amount of axis misalignment, the axis misalignment may be absorbed.

In the second embodiment, the elongated hole 61 extends through the receiving member 42, but does not need to extend through and may be formed like a groove.

In the above embodiment, the elongated hole 61 is formed in the radial direction of the receiving member 42. However, the elongated hole 61 may be formed so that the longitudinal direction thereof is inclined with respect to the radial direction as long as problems regarding power transmission between the pulley and the receiving member do not arise.

The single-headed piston compressor C may be changed to a double-headed piston compressor.

The present invention is applicable to a compressor of a type in which a drive plate is supported so that it inclines in a relatively rotatable manner with respect to the drive shaft, such as a wobble compressor.

The compressor C may also be of a fixed displacement type in which the stroke of the piston 25 cannot be changed.

The present invention is also applicable to a rotary type compressor such as a scroll compressor.

The pulley, which serves as the second rotor, may be replaced by a sprocket, a gear, and the like.

The present invention is applicable to a rotary machine other than a compressor.

## Claims

1. A rotary machine comprising:
a housing;
a rotating shaft rotatably supported by the housing;
a first rotor integrally and rotatably fixed to the rotating shaft outside the housing;
a second rotor rotatably supported on the housing outside the housing and operably connected to the first rotor in a state substantially coaxial to the first rotor; and
an absorption mechanism, arranged on a connecting portion of the first rotor and the second rotor, for absorbing misalignment between the axis of the first rotor and the axis of the second rotor, the absorption mechanism being formed from a rigid member.

2. The rotary machine as claimed in claim 1, wherein the absorption mechanism includes:
a support member rotatably supported on one of the first rotor and the second rotor, the support member being rotatably supported on that rotor about an axis parallel to a rotation axis of the rotor supporting the support member; and
an eccentric pin, arranged relatively rotatable to at least one of the other one of the first rotor and the second rotor and the support member, for connecting the other one of the two rotors and the support member, the eccentric pin being arranged eccentric to an axis of the support member by an eccentricity amount that is greater than an amount of axis misalignment between the two rotors so that the axis of the other one of the two rotors does not overlap the axis of eccentric pin.

3. The rotary machine as claimed in claim 1, wherein the absorption mechanism includes:
a connecting pin projecting from one of the two rotors and having an axis parallel to a rotation axis of that rotor; and
an elongated hole-like or groove-like connecting portion formed on the other one of the two rotors so as to generally extend in a radial direction of that rotor and face the connecting pin, wherein
the connecting pin is inserted into the connecting portion so as to be slidable along the connecting portion and rotatable within the connecting portion.

4. The rotary machine as claimed in any of claims 1 to 3, further comprising a compression mechanism for compressing refrigerant based on rotation of the rotating shaft.

5. The rotary machine as claimed in claim 4, wherein the compression mechanism is a piston-type compression mechanism.

6. The rotary machine as claimed in claim 4 or 5, wherein the compression mechanism is formed so that the amount of refrigerant discharges per one rotation of the rotating shaft is variable.
